Europäisches Patentamt

European Patent Office

Office européen des brevets

(11) Veröffentlichungsnummer: **0 320 581**
**B1**

(12) **EUROPÄISCHE PATENTSCHRIFT**

(45) Veröffentlichungstag der Patentschrift:
07.11.90

(21) Anmeldenummer: 88115749.9

(22) Anmeldetag: 24.09.88

(51) Int. Cl.⁵: **B60N 3/18, A47G 23/02**

(54) Aufnahme für Trinkbehälter, insbesondere in Fahrzeugen.

(30) Priorität: 16.12.87 DE 3742636

(43) Veröffentlichungstag der Anmeldung:
21.06.89 Patentblatt 89/25

(45) Bekanntmachung des Hinweises auf die Patenterteilung:
07.11.90 Patentblatt 90/45

(84) Benannte Vertragsstaaten:
BE ES FR GB IT

(56) Entgegenhaltungen:
EP-A- 160 480
EP-A- 168 887
CH-A- 437 014
CH-A- 483 822
FR-A- 1 410 692
US-A- 4 583 707
US-A- 4 606 523

(73) Patentinhaber: **DAIMLER-BENZ
AKTIENGESELLSCHAFT, Mercedesstrasse 136,
D-7000 Stuttgart 60(DE)**

(72) Erfinder: **Kotzab, Johann, Beethovenstrasse 14,
D-7311 Notzingen(DE)**
Erfinder: **Grimm, Karl-Heinz, Birkenstrasse 7,
D-7410 Reutlingen 11(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Aufnahme für Trinkbehälter, insbesondere in Fahrzeugen

Die Erfindung betrifft eine Aufnahme für Trinkbehälter entsprechend dem Oberbegriff des Anspruchs 1.

Eine derartige Aufnahme ist aus der DE-B 2 605 760 bekannt. Diese wird durch einen sich konisch verjüngenden Randkragen gebildet, der vom Rand einer in eine Halteplatte eingebrachten Aussparung ausgeht und sich gegen deren lichten Querschnitt mit einer an die Form üblicher konischer Trinkbecher angepaßten Neigung erstreckt. Die Aufnahme wird durch eine Bodenplatte ergänzt, die den Trinkbehälter an seiner Aufstandsfläche abstützt, damit eine kippsichere Halterung auch für im Durchmesser variierende Trinkbecher noch gewährleistet ist. Darüber hinaus konnen aber keine Trinkbehälter in die Aufnahme sicher eingesetzt werden, die von dieser Becherform abweichen.

In der DE-A 1 944 604 ist ein Flaschenhalter beschrieben, der eine Stützplatte zum Unterstützen der Flasche und einen zentrisch darüber angeordneten Ring umfaßt, in den eine Flasche einsetzbar ist. In diesem Ring ist ein ringförmiges Futter aus plastischem Werkstoff mit zur Ringöffnung gerichteten Spitzen festgelegt, und an die Stützplatte ist ein Zentrierring angeformt, in den ein schalenförmiges Futter eingesetzt ist. Durch Einzwängen in diese Futter kann aber nur einer Flasche, die in ihrem Querschnitt exakt zu den Ringöffnungen passt, Halt gegeben werden.

Der Erfindung liegt deshalb die Aufgabe zugrunde, eine Aufnahme zu schaffen, die geeignet ist verschieden geformte Trinkbehälter aufzunehmen und wackelfrei zu halten.

Die Aufgabe wird durch die kennzeichnenden Merkmale des Anspruchs 1 gelöst

Die Abstützung eines Trinkbehälters erfolgt allein in der Aufnahme selbst, die dazu einen biegesteifen Stützschenkel um die Austrittsöffnung aufweist, an dem jeder geeignete Trinkbehälter zur Anlage kommen muß, während die wackelfreie Halterung des Trinkbehälters durch den zweiten, darüberliegenden Halteschenkel des im Querschnitt U-förmig ausgebildeten Aufnahmeprofils erreicht wird, der dazu durch seine schmale Querschnittsform nachgiebig ausgebildet ist, wodurch er sich an verschiedene Behälterausformungen elastisch anlegt.

Damit kann eine Aufnahme geschaffen werden, die entsprechend ihrem gewählten lichten Durchgangsquerschnitt für den Einsatz bei zylindrischen, ebenso wie bei konischen oder ausgebauchten Trinkbehältern mit verschiedenen Durchmessern geeignet ist, und die diese Trinkbehälter bei Erschütterungen und Bewegungen durch das Fahrzeug vibrationsarm festhält. Darüber hinaus ergibt eir derartig einfach geformtes Profil eine wirtschaftliche Herstellung.

Die im Anspruch 2 genannte Anlageschräge erweist sich vor allem für die Aufnahme von Getränkedosen als vorteilhaft, da diese im Bodenbereich ebenfalls angeschrägt sind und damit eine formschlüssige Abstützung am Stützschenkel finden.

Ein Ausführungsbeispiel der Erfindung ist in der Zeichnung dargestellt.

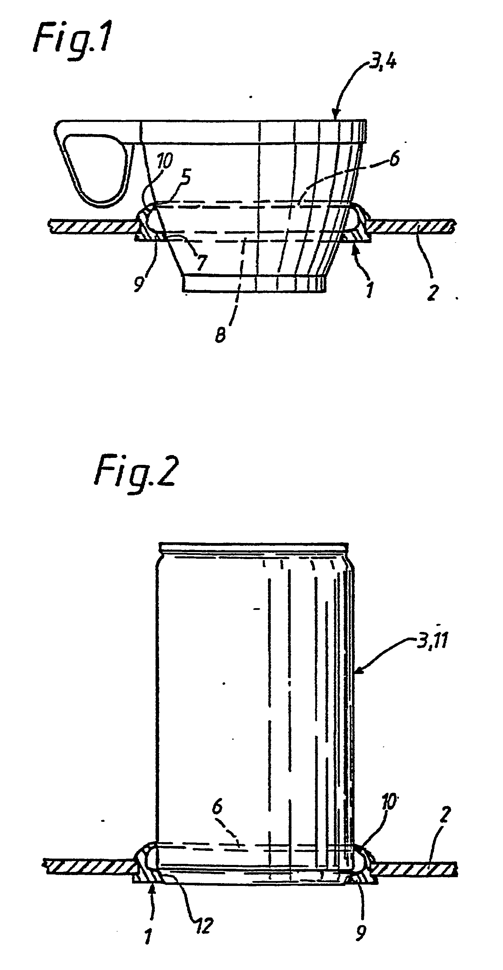

Die Figuren 1 und 2 zeigen eine in einer Aussparung einer Halteplatte festliegende Aufnahme, in die unterschiedliche Trinkbehälter eingesetzt sind.

In Figur 1 ist in einer Aufnahme 1, die in einer fahrzeugfesten Halteplatte 2 festgelegt ist, ein Trinkbehälter 3 in der Form einer Kaffetasse 4 aufgenommen. Um diese fest und kippsicher zu lagern, weist die Aufnahme 1 ein ringförmiges, im Querschnitt U-förmiges Profil auf, das mit einem oberen Schenkelende 5 den Querschnitt einer Einführöffnung 6 der Aufnahme 1 und mit dem anderen Schenkelende 7 den Querschnitt einer fluchtend darunterliegenden Austrittsöffnung 8 begrenzt.

Die Aufnahme 1 besteht aus elastischem Material, wobei aber ein Stützschenkel 9 des Profils, der um die Austrittsöffnung 8 liegt, durch seine massive Form relativ biegesteif ist und damit die Kaffeetasse 4 abstützt, während ein die Einführöffnung 6 umgebender Halteschenkel 10 durch seine schmale Querschnittsform nachgiebig ausgebildet ist und sich elastisch an die ausgebauchte Wand der Kaffeetasse 4 anlegt.

In Figur 2 wird durch die Aufnahme 1 ein Trinkbehälter 3 in Form einer Getränkedose 11 aufgenommen, deren zylindrischer Querschnitt größer als der der Einführöffnung 6 ist, und die sich wiederum am Stützschenkel 9 abstützt, der zur formschlüssigen Aufnahme der Getränkedose 11 zur Einführöffnung 6 hinweisend eine Anlageschräge 12 aufweist. Kippsicher gehalten wird die Getränkedose 11 durch eden Halteschenkel 10 der Aufnahme 1, der diese elastisch nachgiebig umschließt.

## Patentansprüche

1. Aufnahme für Trinkbehälter, insbesondere in Fahrzeugen, die in einer Aussparung einer Halteplatte festliegt, und die einen sich nach unten konisch verengenden, durchgängigen lichten Querschnitt aufweist, in den ein Trinkbehälter einsetzbar ist,
**dadurch gekennzeichnet,**
daß die Aufnahme (1) durch ein ringförmiges, im Querschnitt U-förmiges Profil aus elastischem Material gebildet ist, und mit je einem Schenkelende (5; 7) den Querschnitt einer Einführöffnung (6) und den einer koaxial darunterliegenden Austrittsöffnung (8) begrenzt, wobei der untere Stützschenkel (9) des Profils um die Austrittsöffnung (8) biegesteif ausgeformt ist, während der die Einführöffnung (6) umgebende obere Halteschenkel (10) des Profils durch seine schmale Querschnittsform nachgiebig ausgebildet ist und sich dadurch an verschieden geformte Trinkbehälter (3), deren Querschnitt bereichsweise größer als der der Einführöffnung (6) ist, anlegt.

2. Aufnahme für Trinkbehälter nach Anspruch 1,
**dadurch gekennzeichnet,**

daß der Stützschenkel (9) zur Einführöffnung (6) hinweisend eine ebene Anlageschräge (12) aufweist.

**Claims**

1. A holder for drink containers, particularly in vehicles, which is situated in a recess of a holder plate and which has a downwardly conically narrowing through clear cross-section into which a drink container can be inserted, characterized in that the holder (1) is formed by an annular profile of elastic material U-shaped in cross-section, and which by means of respectively one arm end (5, 7) delimits the cross-section of an insertion opening (6) and the cross-section of a removal opening (8) situated co-axially thereunder, the lower supporting arm (9) of the profile being shaped flexurally stiff around the removal opening (8), whereas the upper supporting arm (10) of the profile surrounding the insertion opening (6) is designed to be yielding as a result of its narrow cross-sectional shape and thereby applies on diversely shaped drink containers (3) the cross-section of which is in area terms greater than that of the insertion opening (6).

2. A holder for drink containers according to claim 1, characterized in that the supporting arm (9) has a level application bevelling (12) directed towards the insertion opening (6).

**Revendications**

1. Réceptacle pour récipient à boisson, notamment dans des véhicules automoiles, qui est maintenu dans un évidement d'une plaque de support et qui comporte une section de passage se rétrecissant vers le bas avec un profil conique et dans laquelle peut être engagé un récipient pour boisson, caractérisé en ce que le réceptacle (1) est constitue par un profilé en matière élastique, de forme annulaire et à section droite en U, en délimitant par les extrémités respectives de ses ailes (5; 7) la section d'une ouverture d'entrée (6) et celle d'une ouverture de sortie (8) située coaxialement en dessous, l'aile inférieure d'appui (9) du profilé entourant, avec rigidité à la flexion, l'ouverture de sortie (3) tandis que l'aile supérieure de retenue (10) du profilé, qui entoure l'ouverture d'entrée (6), est réalisée flexible du fait de la forme étroite de sa section et s'applique ainsi contre des récipients de boisson (3) de formes différentes, dont la section est localement plus grande que celle de l'ouverture d'entrée (6).

2. Réceptacle pour récipient à boisson selon la revendication 1, caractérisé en ce que l'aile d'appui (9) comporte un biseau plat d'appui (12), dirigé vers l'ouverture d'entrée (6).

*Fig.1*

*Fig.2*